# EUROPEAN PATENT APPLICATION

(11) **EP 4 748 561 A1**
(43) Date of publication of application: **27.05.2026**
(21) Application number: 24859530.8
(22) Date of filing: 20.08.2024
(51) Int. Cl.: B29C 73/04

(54) **METHOD FOR REPAIRING PORTION TO BE REPAIRED**

(30) Priority: 28.08.2023 JP 2023137827
(71) Applicant: Mitsubishi Heavy Industries, Ltd., Tokyo 100-8332 (JP); Akita University, Akita-shi Akita 010-8502 (JP)
(72) Inventor: MURAOKA, Mikio, Akita-shi, Akita 010-8502 (JP); MATSUYAMA, Daiki, Tokyo 100-8332 (JP); TAKAGI, Kiyoka, Tokyo 100-8332 (JP)
(74) Representative: Hoffmann Eitle
(86) International application number: PCT/JP2024/029397
(87) International publication number: WO 2025/047497

(57) **Abstract**

A repair method of a repair object portion in which the repair object portion serving as an object to be repaired is repaired using a repair patch containing a resin includes the steps of: placing the repair patch on the repair object portion; placing a heat transfer material on the repair patch; placing a susceptor serving as a heat generation source on the heat transfer material; air-tightly sealing the repair patch, the heat transfer material, and the susceptor with a bagging film; and inductively heating the susceptor with a magnetic field to heat the repair patch via the heat transfer material while an inside of the bagging film is subjected to vacuum evacuation.

## Description

### Field

The present disclosure relates to a repair method of a repair object portion.

### Background

As a conventional repair method of a repair object portion, a repair method is known in which the repair object portion is covered with a repair patch, and the repair patch is heated by a heater mat to thermally cure a resin contained in the repair patch, resulting in the repair patch being bonded to the repair object portion (refer to Patent Literature 1, for example).

### Citation List

### Patent Literature

Patent Literature 1: Japanese Patent Application Laid-open No. 2014-188995 Summary

### Technical Problem

The repair method in Patent Literature 1, in which the repair patch is heated using the heater mat, causes heat from the heater mat to leak to the surrounding portion of the repair patch. The repair method in Patent Literature 1, thus, results in the efficiency of heating the repair patch by the heater mat being low, thereby taking time to adhere the repair patch to the repair object portion. As a result, the repair work takes a long time. The heat leakage from the heater mat to the surrounding portion of the repair patch causes the surrounding portion to be unnecessarily heated. The heat may cause an influence such as material degradation.

The present disclosure aims to provide a repair method of a repair object portion that can quickly perform repair with uniform heating while reducing a heat influence on the surrounding portion of the repair object portion.

### Solution to Problem

A repair method of a repair object portion according to the present disclosure is a repair method in which the repair object portion serving as an object to be repaired is repaired using a repair patch containing a resin. The repair method includes the steps of: placing the repair patch on the repair object portion; placing a heat transfer material on the repair patch; placing a susceptor serving as a heat generation source on the heat transfer material; air-tightly sealing the repair patch, the heat transfer material, and the susceptor with a bagging film; and inductively heating the susceptor with a magnetic field to heat the repair patch via the heat transfer material while an inside of the bagging film is subjected to vacuum evacuation.

Another repair method of a repair object portion according to the present disclosure is a repair method in which the repair object portion serving as an object to be repaired is repaired using a repair patch containing a metal and the metal functions as a susceptor. The repair method includes the steps of: placing a bonding patch containing a resin on the repair object portion; placing the repair patch on the bonding patch; air-tightly sealing the bonding patch and the repair patch with a bagging film; and inductively heating the metal in the repair patch with a magnetic field to heat the bonding patch while an inside of the bagging film is subjected to vacuum evacuation. Advantageous Effects of Invention

The present disclosure makes it possible to quickly perform the repair with uniform heating while reducing the heat influence on the surrounding portion of the repair object portion.

### Brief Description of Drawings

FIG. 1 is an explanatory view related to a repair method of a repair object portion according to a first embodiment.
FIG. 2 is a flowchart related to the repair method of the repair object portion according to the first embodiment.
FIG. 3 is a diagram related to a temperature distribution of a repair patch.
FIG. 4 is an explanatory view related to the repair method of the repair object portion according to a second embodiment.

### Description of Embodiments

The following describes embodiments of the present disclosure in detail with reference to the accompanying drawings. The embodiments do not limit the present disclosure. The constituent elements described in the following embodiments include those easily envisaged by those skilled in the art and substantially identical ones. The constituent elements described below can be combined as appropriate, and each of the embodiments can be combined.

### [First embodiment]

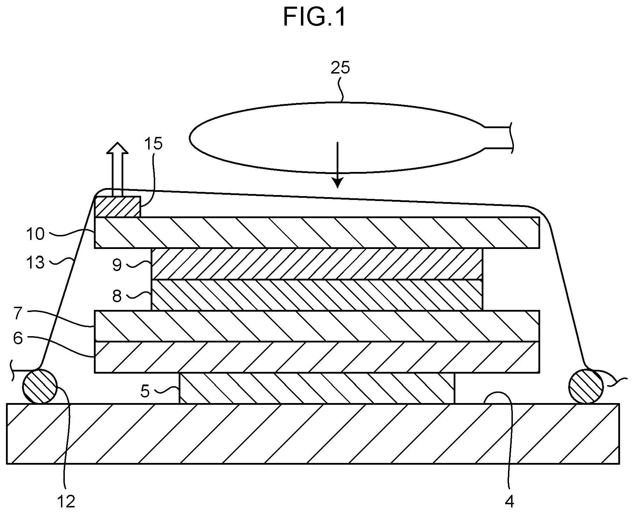

In a repair method of a repair object portion according to a first embodiment, a repair object portion 4 serving as the object to be repaired is repaired using a repair patch 5 containing a resin. Specifically, in the repair method of the repair object portion, the repair object portion 4 is repaired with a plurality of repair patches 5 formed in multiple layers by repeating the step of curing the repair patch 5 of a single layer. With reference to FIG. 1, a layered structure related to the repair method of the repair object portion 4 is described.

### (Repair method of the repair object portion)

FIG. 1 is an explanatory view related to the repair method of the repair object portion according to the first embodiment. As illustrated in FIG. 1, in the repair method of the repair object portion 4, various members including the repair patch 5 are layered. Specifically, the repair patch 5, a release film (release material) 6, a deaeration cloth (first deaeration member) 7, a heat transfer material 8, a susceptor 9, and a deaeration cloth (second deaeration member) 10 are placed in this order from the repair object portion 4 side. These members are then covered with a bagging film 13, and the space between the repair object portion 4 and the bagging film 13 are air-tightly sealed with a sealant 12.

The repair patch 5 is a composite material in which a resin is impregnated into sheet-like reinforced fibers. Examples of the reinforced fibers include carbon fibers and glass fibers. Unidirectional materials, woven fabrics, non-woven fabrics, etc. are used. The resin is a thermoplastic resin, such as PP (polypropylene), PEI (polyetherimide), and PEEK (polyetheretherketone). The repair patch 5 may have any of a circular or rectangular shape, as long as the repair patch 5 has a sheet-like form. In the first embodiment, the thermoplastic resin is applied as the resin, but a thermosetting resin may also be applied.

The release film 6 is a perforated film provided with a number of through holes, and has a release property. The release film 6 may have the release property in its film raw material or have the release property given by a release agent applied to the film raw material. The release film 6 has a higher heat resistance exceeding a heating temperature applied in the repair. The release film 6 is a FEP (fluoropolymer) film or a polyimide film coated with a release agent, for example.

The deaeration cloth 7 is a thin woven or non-woven fabric and has a heat resistance exceeding the heating temperature applied in the repair. The deaeration cloth 7 is a woven fabric made of glass fibers, for example. The release film 6 and the deaeration cloth 7 may be separated from or integrated with each other. The configuration is not limited to the examples.

The heat transfer material 8 is a layered body in which a plurality of flexible metal films are layered. The heat transfer material 8 transfers heat transferred from the susceptor 9 in the in-plane direction perpendicular to the layering direction to achieve heat equalization such that a temperature distribution in the in-plane direction is uniform. Examples of the metal film include an aluminum foil and a copper foil. The heat transfer material 8 may be placed such that the heat transfer coefficient of the metal film on the repair patch 5 side is higher than that of the metal film on the susceptor 9 side. Specifically, the heat transfer material 8 may be the layered body in which a plurality of aluminum foils are layered. The heat transfer material 8 may be the layered body in which a copper foil is placed on the repair patch 5 side and a plurality of aluminum foils are layered on the susceptor 9 side. Furthermore, the heat transfer material 8 may be the layered body in which a plurality of copper foils are layered. The heat transfer material 8 structured as the layered body can be placed along the shape of the repair object portion 4 even when the repair object portion 4 has a curved surface shape.

The susceptor 9 is a heat generation source that is heated by induction heating. The susceptor 9 is made of a conductive material. The susceptor 9 may be made of a magnetic material to enhance heating efficiency. The examples of the conductive material include aluminum and carbon fibers. The examples of the magnetic material include iron and stainless steel. The material is formed into a flexible fiber fabric, a metal film, or a metal mesh, for example. The susceptor 9 that is formed to have a flexibility can be placed along the shape of the repair object portion 4 even when the repair object portion 4 has a curved surface shape.

The deaeration cloth 10 also functions as a heat insulator, and is formed into a woven or non-woven fabric thicker than the deaeration cloth 7. The deaeration cloth 10 has a higher heat resistance exceeding the heating temperature applied in the repair. This is the same as that described for the deaeration cloth 7. The deaeration cloth 10 is composed of a plurality of layered woven fabrics made of glass fibers, for example.

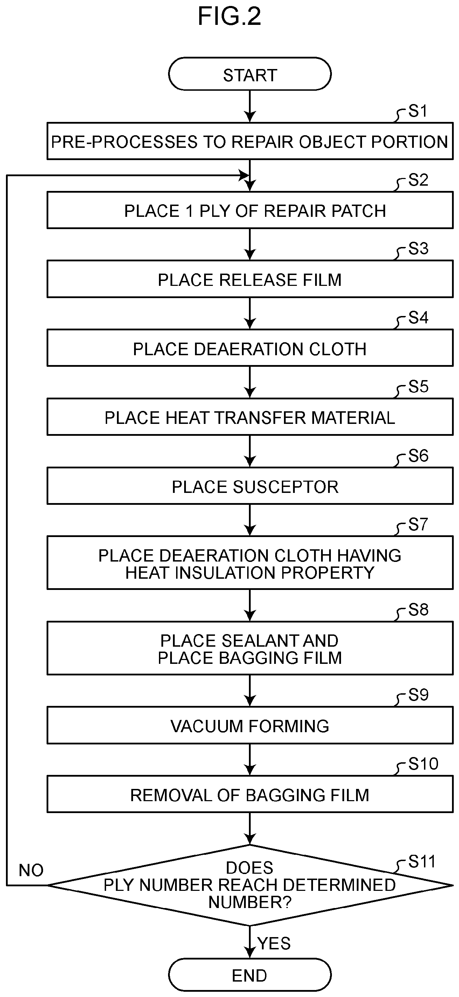

The following describes the repair method of the repair object portion with reference to FIGS. 1 and 2. FIG. 2 is a flowchart related to the repair method of the repair object portion according to the first embodiment. In the repair method of the repair object portion 4, pre-processes to the repair object portion 4 are performed before placing the repair patch 5 (step S1).

At step S1, inspection of the repair object portion 4, identification of the range to be repaired in the repair object portion 4, machining to the repair object portion 4 before the repair, and pre-treatment for adhesion to the repair object portion 4 are performed, for example. At step S1, the number of layers of the repair patch 5 to be overlaid on the repair object portion 4 is determined.

In the repair method, after performing step S1, the repair patch 5, which is a single layer (1PLY), is placed on the repair object portion 4 (step S2), as illustrated in FIG. 1. As described above, the single layer repair patch is placed at step S2; however, more than one layer is acceptable. A plurality of repair patches 5, that is, multiple layers (multiple PLY), may be placed, for example. The reason why the number of layers of the repair patch 5 to be overlaid is set to 1PLY at step S2 is because it uniforms the temperature distribution in the layering direction and reduces the bending stiffness of the repair patch 5 in the layering direction. For this reason, multiple PLY is acceptable when the temperature in the layering direction of 1PLY or more of the repair patch 5 can be uniformed and the repair patch 5 can be placed along the shape of the repair object portion 4. In the repair method, after performing step S2, the release film 6 is placed on the repair patch 5 (step S3). In the repair method, after performing step S3, the deaeration cloth 7 is placed on the release film 6 (step S4). The release film 6 placed at step S3 and the deaeration cloth 7 placed at step S4 are of similar size and each have a larger placement area than that of each of the repair patch 5, the heat transfer material 8, and the susceptor 9.

In the repair method, after performing step S4, the heat transfer material 8 is placed on the deaeration cloth 7 (step S5). In the repair method, after performing step S5, the susceptor 9 is placed on the heat transfer material 8 (step S6). In the repair method, after performing step S6, the deaeration cloth 10 having a heat insulation property is placed on the susceptor 9 (step S7). In the repair method, after performing step S7, the repair patch 5, the release film 6, the deaeration cloth 7, the heat transfer material 8, the susceptor 9, and the deaeration cloth 10 are covered with the bagging film 13, and the sealant 12 is placed between the repair object portion 4 and the bagging film 13 to cause the inside of the bagging film 13 to be air-tightly sealed (Step S8).

In the repair method, after performing step S8, vacuum forming is performed by inductively heating the susceptor 9 by applying a magnetic field with a magnetic field coil 25 while the inside of the bagging film 13 is subjected to vacuum evacuation via a vacuum port 15 in contact with the deaeration cloth 10 (step S9). At step S9, the susceptor 9 is heated, and heat from the susceptor 9 enters the repair patch 5 via the heat transfer material 8. The heat transfer material 8 transfers the heat transferred from the susceptor 9 in the in-plane direction, thereby making the temperature distribution uniform in the in-plane direction. The repair patch 5 received the heat is bonded to the repair object portion 4. At step S9, the magnetic field coil 25 is placed such that eddy currents are generated in the plane of the susceptor 9. In other words, the magnetic field coil 25 is placed above the susceptor 9 and inductively heats the susceptor 9 by applying a magnetic field such that the direction of the formed magnetic field is perpendicular to the in-plane direction of the susceptor 9.

In the repair method, after performing step S9, the bagging film 13 is removed to expose the inside to the atmosphere (step S10). After performing step S10, the repair method determines whether the number of layers (PLY number) of the repair patch 5 is reached to that determined at step S1 (step S11). In the repair method, if it is determined at step S11 that the number of layers of the repair patch 5 reaches the determined number (Yes at step S11), the repair method of the repair object portion 4 ends. In the repair method, after layering the repair patches 5 on the repair object portion 4, post-processes such as inspection and painting may be performed, if necessary. If the repair method determines at step S11 that the number of layers of the repair patch 5 does not reach the determined number (No at step S11), step S2 through step S11 are repeated until the number of layers reaches the determined number. When steps S2 through S11 are repeated, the release film 6 to the bagging film 13 may be handled as a single unit for being attached and detached.

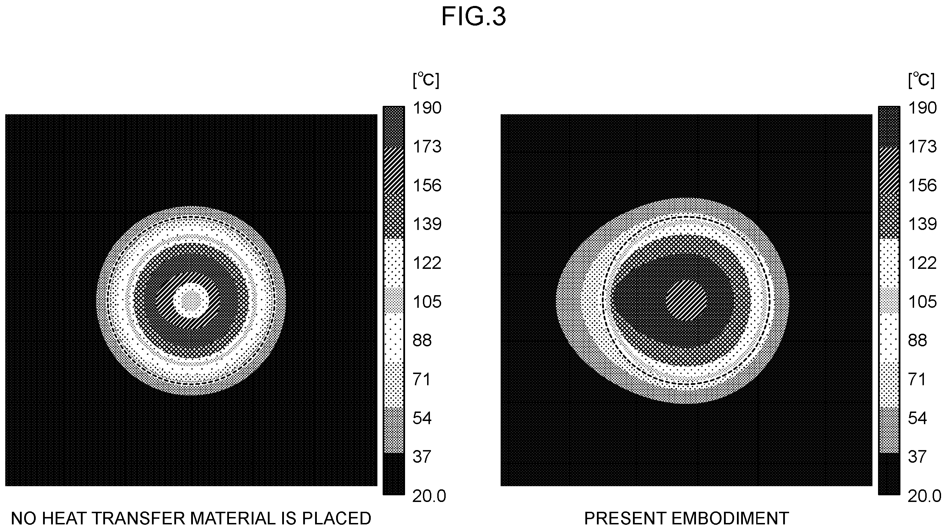

The following describes the temperature distribution of the repair patch with reference to FIG. 3. FIG. 3 is a diagram related to the temperature distribution of the repair patch. FIG. 3 illustrates the temperature distribution of the repair patch 5 heated by induction heating in a conventional manner (in which no heat transfer material 8 is placed) and the temperature distribution of the repair patch 5 heated by induction heating in this repair method according to the embodiment. As illustrated in FIG. 3, it is confirmed that the temperature distribution of the repair patch 5 in the repair method according to the embodiment is more uniform than the temperature distribution of the repair patch 5 in the conventional method.

### [Second embodiment]

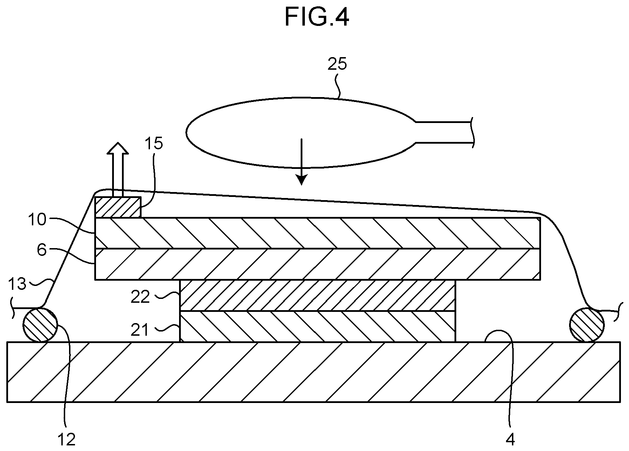

The following describes a second embodiment with reference to FIG. 4. FIG. 4 is an explanatory view related to the repair method of the repair object portion according to the second embodiment. In the second embodiment, the parts different from the first embodiment will be described to avoid duplicate descriptions, and the parts having the same structures as the first embodiment will be described with the same symbols.

### (Repair method of the repair object portion)

The repair method of the repair object portion 4 in the second embodiment uses a repair patch 22 containing a metal instead of the repair patch 5 of the first embodiment. Specifically, in the repair method of the repair object portion 4, a bonding patch 21, the repair patch 22, the release film 6, and the deaeration cloth 10 are placed in this order from the repair object portion 4 side. The descriptions of the release film 6 and the deaeration cloth 10 are the same as those in the first embodiment, and are therefore omitted.

The bonding patch 21 bonds the repair patch 22 to the repair object portion 4. The bonding patch 21 contains a resin. Examples of the resin include a thermoplastic resin such as a resin film, and a thermosetting resin such as a film adhesive.

The repair patch 22 is a metal film and functions as the susceptor. In other words, the repair patch 22 is the heat generation source that is heated by induction heating.

In the repair method of the repair object portion 4, the step of placing the bonding patch 21 on the repair object portion 4 is performed, and then the step of placing the repair patch 22 on the bonding patch 21 is performed. In the repair method of the repair object portion 4, after placing the release film 6 on the repair patch 22, the step of placing the deaeration cloth 10 having a heat insulation property on the release film 6 is performed. Thereafter, in the repair method of the repair object portion 4, the step of covering the bonding patch 21, the repair patch 22, the release film 6, and the deaeration cloth 10 with the bagging film 13, and placing the sealant 12 between the repair object portion 4 and the bagging film 13 to cause the inside of the bagging film 13 to be air-tightly sealed.

In the repair method, vacuum forming is performed by inductively heating the repair patch 22 by applying a magnetic field with the magnetic field coil 25 while the inside of the bagging film 13 is subjected to vacuum evacuation via the vacuum port 15 in contact with the deaeration cloth 10. In the second embodiment, the magnetic field coil 25 is placed such that eddy currents are generated in the plane of the repair patch 22 in the same manner as the first embodiment. In other words, the magnetic field coil 25 is placed above the repair patch 22 and inductively heats the repair patch 22 by applying a magnetic field such that the direction of the formed magnetic field is perpendicular to the in-plane direction of the repair patch 22. When the repair patch 22 is heated, heat from the repair patch 22 is input to the bonding patch 21. The repair patch 22, which is a metal film, transfers heat in the in-plane direction, thereby making the temperature distribution uniform in the in-plane direction. When the repair patch 22 is thin and does not function well as a heat transfer material, the repair method of the repair object portion 4 in the first embodiment may be applied. In this case, the repair patch 5 in the first embodiment is replaced with the bonding patch 21 and the repair patch 22.

As described above, the repair method of the repair object portion 4 described in the first and the second embodiments is understood as follows, for example.

In the repair method of the repair object portion part 4 according to a first aspect, the repair object portion 4 serving as the object to be repaired is repaired using the repair patch 5 containing a resin. The repair method performs step S2 of placing the repair patch 5 on the repair object portion 4, step S5 of placing the heat transfer material 8 on the repair patch 5, step S6 of placing the susceptor 9 serving as the heat generation source on the heat transfer material 8, step S8 of air-tightly sealing the repair patch 5, the heat transfer material 8, and the susceptor 9 with the bagging film 13, and step S9 of inductively heating the susceptor 9 with a magnetic field to heat the repair patch 5 via the heat transfer material 8 while the inside of the bagging film 13 is subjected to vacuum evacuation.

In this structure, the susceptor 9 is heated by induction heating, thereby making it possible to quickly heat the repair patch 5 via the heat transfer material 8. In this structure, heat is input from the susceptor 9 to the repair patch 5 via the heat transfer material 8, thereby making it possible to prevent heat leakage to the surrounding portion of the repair patch 5, and prevent the heat influence to the surrounding of the repair object portion 4. In this structure, the repair patch 5 is heated via the heat transfer material 8, thereby making it possible to heat the repair patch 5 uniformly. This allows a rapid repair by uniform heating while preventing the heat influence to the surrounding of the repair object portion 4.

As a second aspect, in the repair method of the repair object portion 4 according to the first aspect, the repair patch 5 is a composite material in which the resin is impregnated into the reinforced fibers.

This structure can make the repair object portion 4 to which the repair patch 5 is bonded strong.

As a third aspect, in the repair method of the repair object portion 4 according to the first or the second aspect, the susceptor 9 is a flexible metal film or metal mesh.

This structure can place the susceptor 9 along the shape of the repair object portion 4 even when the repair object portion 4 has a curved surface.

As a fourth aspect, in the repair method of the repair object portion 4 according to any one of the first to the third aspects, the heat transfer material 8 is a layered body in which a plurality of flexible metal films are layered.

This structure can make the bending stiffness of the heat transfer material 8 small, thereby making it possible to place the heat transfer material 8 along the shape of the repair object portion 4 even when the repair object portion 4 has a curved surface. In this structure, multiple metal films are layered, thereby making it possible to transfer heat transferred from the susceptor 9 in the in-plane direction to make the temperature distribution uniform.

As a fifth aspect, in the repair method of the repair object portion 4 according to the fourth aspect, the heat transfer coefficient of the metal film on the repair patch 5 side is higher than that of the metal film on the susceptor 9 side in the heat transfer material 8.

This structure can enhance the heat transfer on the repair patch 5 side, thereby making it possible to efficiently achieve heat equalization.

As a sixth aspect, in the repair method of the repair object portion 4 according to any one of the first to fifth aspects, step S1 of determining the number of layers of the repair patch 5 to be overlaid on the repair object portion 4 is further performed, and the steps from step S2 of placing the repair patch 5 to step S9 of heating the repair patch are repeated for the determined number of layers.

This structure allows the repair patches 5 to be layered one layer at a time, thereby making it possible to reduce the residual stresses that occur inside the repair patches 5. In this structure, the repair patches 5 are placed on the repair object portion 4 one layer at a time and subjected to heat repair, thereby making it possible to reduce the heating time per step. This makes it possible to reduce the total repair time and prevent the heat influence on the surrounding of the repair object portion 4. Furthermore, this structure can reduce the bending stiffness of the repair patch 5 in the layering direction, thereby making it possible to place the repair patch 5 along the shape of the repair object portion 4 even when the repair object portion 4 has a curved surface shape.

As a seventh aspect, in the repair method of the repair object portion 4 according to any one of the first to sixth aspects, steps S3 and S4 are further performed. Step S3 is performed to place the release material (release film 6) between the repair patch 5 and the heat transfer material 8. Step S4 is performed to place the first deaeration member (deaeration cloth 7) between the release material and the heat transfer material 8.

This structure can suitably peel off the member containing the release material placed on the repair patch 5.

As an eighth aspect, in the repair method of the repair object portion 4 according to any one of the first to seventh aspects, step S7 of placing the second deaeration member (deaeration cloth 10) that functions as a heat insulator on the susceptor 9 is performed.

This structure allows the second deaeration member to reduce heat dissipation from the susceptor 9, thereby making it possible to efficiently heat the repair patch 5.

In the repair method of the repair object portion 4 according to a ninth aspect, the repair object portion 4 serving as the object to be repaired is repaired using the repair patch 22 containing a metal and the metal functions as the susceptor. The repair method performs the step of placing the bonding patch 21 containing a resin on the repair object portion 4, the step of placing the repair patch 22 on the bonding patch 21, the step of air-tightly sealing the bonding patch 21 and the repair patch 22 with the bagging film 13, and the step of inductively heating the metal in the repair patch 22 with a magnetic field to heat the bonding patch 21 while the inside of the bagging film 13 is subjected to vacuum evacuation.

In this structure, the repair patch 22 is heated by induction heating, thereby making it possible to quickly heat the bonding patch 21. In this structure, heat is input from the repair patch 22 to the bonding patch 21, thereby making it possible to prevent heat leakage to the surrounding portion of the repair patch 22, and prevent the heat influence to the surrounding of the repair object portion 4. In this structure, the repair patch 22 is a metal film, thereby making it possible to heat the bonding patch 21 uniformly. This allows a rapid repair by uniform heating while preventing the heat influence to the surrounding of the repair object portion 4.

The repair method of the repair object portion 4 according to a tenth aspect further performs the step of placing the release material (release film 6) on the repair patch 22.

This structure can suitably peel off the member containing the release material placed on the repair patch 22.

### Reference Signs List

4 Repair object portion
5 Repair patch
6 Release film
7 Deaeration cloth
8 Heat transfer material
9 Susceptor
10 Deaeration cloth
12 Sealant
13 Bagging film
15 Vacuum port

## Claims

1. A repair method of a repair object portion in which the repair object portion serving as an object to be repaired is repaired using a repair patch containing a resin, the repair method comprising the steps of:
placing the repair patch on the repair object portion;
placing a heat transfer material on the repair patch;
placing a susceptor serving as a heat generation source on the heat transfer material;
air-tightly sealing the repair patch, the heat transfer material, and the susceptor with a bagging film; and
inductively heating the susceptor with a magnetic field to heat the repair patch via the heat transfer material while an inside of the bagging film is subjected to vacuum evacuation.

2. The repair method of the repair object portion according to claim 1, wherein the repair patch is a composite material in which the resin is impregnated into reinforced fibers.

3. The repair method of the repair object portion according to claim 1, wherein the susceptor is a flexible metal film or metal mesh.

4. The repair method of the repair object portion according to claim 1, wherein the heat transfer material is a layered body in which a plurality of flexible metal films are layered.

5. The repair method of the repair object portion according to claim 4, wherein in the heat transfer material, a heat transfer coefficient of the metal film on the repair patch side is higher than a heat transfer coefficient of the metal film on the susceptor side.

6. The repair method of the repair object portion according to claim 1, further comprising a step of determining a number of layers of the repair patch to be overlaid on the repair object portion, wherein the steps from placing the repair patch to heating the repair patch are repeated for the determined number of layers.

7. The repair method of the repair object portion according to claim 1, further comprising the steps of:
placing a release material between the repair patch and the heat transfer material; and
placing a first deaeration member between the release material and the heat transfer material.

8. The repair method of the repair object portion according to claim 1, further comprising a step of placing a second deaeration member that functions as a heat insulator on the susceptor.

9. A repair method of a repair object portion in which the repair object portion serving as an object to be repaired is repaired using a repair patch containing a metal and the metal functions as a susceptor, the repair method comprising the steps of:
placing a bonding patch containing a resin on the repair object portion;
placing the repair patch on the bonding patch;
air-tightly sealing the bonding patch and the repair patch with a bagging film; and
inductively heating the metal in the repair patch with a magnetic field to heat the bonding patch while an inside of the bagging film is subjected to vacuum evacuation.

10. The repair method of the repair object portion according to claim 9, further comprising a step of placing a release material on the repair patch.
